# EUROPEAN PATENT SPECIFICATION

(11) **EP 3 044 447 B1**
(45) Date of publication and mention of the grant of the patent: **09.12.2020**
(21) Application number: 14844451.6
(22) Date of filing: 09.09.2014
(51) Int. Cl.: F02D 13/04, F01L 1/34, F01L 13/06

(54) **METHOD FOR CONTROLLING A COMBUSTION ENGINE TO DECELERATE A VEHICLE**
VERFAHREN ZUR STEUERUNG EINES VERBRENNUNGSMOTORS ZUR ENTSCHLEUNIGUNG EINES FAHRZEUGS
PROCÉDÉ DE COMMANDE D'UN MOTEUR À COMBUSTION INTERNE AUX FINS DE DÉCÉLÉRATION D'UN VÉHICULE

(30) Priority: 11.09.2013 SE 1351047
(43) Date of publication of application: 20.07.2016
(73) Proprietor: Scania CV AB, 151 87 Södertälje (SE)
(72) Inventor: GUNNARSSON, Niclas, S-141 32 Huddinge (SE)
(74) Representative: Scania CV AB
(86) International application number: PCT/SE2014/051030
(87) International publication number: WO 2015/038050

(56) References cited:
- EP-A2- 1 559 875
- WO-A2-2007/042876
- WO-A2-2013/101282
- FR-A1- 2 900 199
- GB-A- 2 282 861
- GB-A- 2 343 485
- US-A- 6 161 521
- US-A1- 2010 175 645
- US-A1- 2010 175 645

## Description

### BACKGROUND OF THE INVENTION AND PRIOR ART

The present invention pertains to a method to decelerate a vehicle, according to the preamble of claim 1.

When vehicles are decelerated and when the throttle is closed in combustion engines, it is desirable to close the fuel supply to the combustion engine with the objective of reducing the fuel consumption and thus reducing the environmental impact. However, it has become apparent that the engine's after-treatment system for exhausts is cooled down during such an operating mode. The cooling down of the after-treatment system arises because inlet air, which is supplied to the cylinders through the inlet valves, passes through the cylinders' combustion chamber, and further through the exhaust valves with no combustion. As a result, the temperature of the inlet air will remain relatively low as it is transported further to the after-treatment system, which results in the inlet air cooling down the after-treatment system.

In order for the after-treatment system to be able to after-treat the combustion engine's exhausts in a satisfactory manner, and thus to reduce emissions in the exhausts, the after-treatment system must achieve an operating temperature in the range of 300-600 °C.

The cooling down of the after-treatment system at the deceleration of the vehicle, and when the throttle is closed in the combustion engine, leads to, at the above operating temperatures, the after-treatment system being non-existent at the subsequent throttle opening and acceleration of the vehicle. Thus, there is no reduction of emissions in the exhausts, which impacts the surrounding environment in a negative way. When the throttle is in a closed or idle position, air will flow past the air damper and thus cause the unwanted problems with cooling down, as described above.

Prior art provides for the use of a separate damper, restricting the air supply to the engine's cylinders while it simultaneously alters the valve control, in order to control the gas flow through the engine's cylinders. However, it has become apparent that these systems do not function satisfactorily in order to prevent the previously described reduction of emissions and prevent the increase of nitrogen oxides, NOx, since the separate damper lets a fraction of air pass through the engine's cylinders and causes an increase of NOx when the engine is reactivated after a deceleration.

A consequential problem that may arise when the valve control change, is that a negative pressure arises in the cylinders' combustion chamber, which causes oil from the crankcase portion to be sucked up past the pistons and into the combustion chamber. The oil then follows the air through the exhaust valves, and further along to the exhaust system, which impacts the environment.

It is also prior art to control the valves in a combustion engine with the objective of achieving a zero flow through the combustion engine's combustion chamber. When a zero flow through the combustion engine is achieved, no air, or a very small fraction of air, will be supplied to the combustion engine's after-treatment system.

Document US 20100175645 A shows how the air flow through a combustion engine is reduced by deactivating one or several cylinders.

US 6161521 A shows how the air flow through an Otto engine is reduced by altering the valve control. A camshaft is used for both the inlet and exhaust valves and the phases for inlet time and exhaust time are shifted, without altering the overlap time for the valves.

WO 2013/101282 A2 shows how a zero flow is achieved in a combustion engine by phase-shifting the point in time for the inlet and exhaust valves' opening and closing times.

WO 2007/042876 discloses a method and system to prevent cooling of the aftertreatment system during engine braking.

### SUMMARY OF THE INVENTION

Despite prior art solutions, there is a need to develop a method to decelerate a vehicle, comprising a combustion engine and a gearbox, where fuel is saved, wherein cooling of the exhaust after-treatment system is avoided and wherein negative pressure in the engine's cylinders is avoided at deceleration and when the throttle is closed.

The objective of the present invention is thus to provide a method to decelerate a vehicle, comprising a combustion engine and a gearbox, wherein fuel is saved at deceleration and when the throttle is closed.

Another objective of the invention is to provide a method to decelerate a vehicle, comprising a combustion engine and a gearbox, wherein cooling down of the exhaust after-treatment system at deceleration and when the throttle is closed is avoided.

Another objective of the present invention is to provide a method to decelerate a vehicle, comprising a combustion engine and a gearbox, in which combustion engine a negative pressure in the combustion engine's cylinders is avoided at deceleration and when the throttle is closed.

These objectives are achieved with a method to decelerate a vehicle of the type specified above, which method is characterised by the features specified in claim 1.

Further, these objectives are achieved with a vehicle comprising a combustion engine and a gearbox, which are controlled to decelerate the vehicle according to the method.

The method according to the present invention entails that fuel supply is closed off during the vehicle's deceleration, and that each camshaft is phase-shifted in relation to the crankshaft, so that each camshaft is phase-shifted to a state when the inlet and exhaust valves are controlled, so that no air is supplied to the exhaust system when the pistons move forwards and backwards in each cylinder. Thus, fuel will be saved, cooling down of the exhaust after-treatment system is avoided and negative pressure in the engine's cylinders is avoided. No increase of NOx will occur when the engine is reactivated, since the flow of charge air is stopped in the respective cylinders.

According to the invention, the first camshaft is phase-shifted +75° to +85° crankshaft degrees, preferably +80°, and the other camshaft is phase-shifted -75° to -85° crankshaft degrees, preferably -80°. At such a phase shift, no air, or a very limited amount of air, will be supplied to the exhaust after-treatment system, resulting in no or a small cooling down of the exhaust after-treatment system when the vehicle is decelerated and the throttle is closed.

According to another embodiment, two inlet valves and two exhaust valves per cylinder are controlled by the respective camshaft. In such a combustion engine, the application of the invention may be very efficient, since the number of valves per cylinder impacts the air's flow through the cylinders, which in turn impacts the cooling down of the exhaust after-treatment system when the vehicle is decelerated and the throttle is closed.

According to another embodiment, two first and two second camshafts are controlled by the respective valve. In such a combustion engine, the application of the invention may be very efficient, since the number of valves per cylinder impacts the air's flow through the cylinders, which in turn impacts the cooling down of the exhaust after-treatment system when the vehicle is decelerated and the throttle is closed. According to another embodiment, each camshaft is phase-shifted by a phase-shifting device. By phase-shifting each camshaft with a phase-shifting device arranged for each camshaft, an efficient phase-shifting of the camshafts may be achieved, so that a zero flow through the cylinders arises, and in order thus to avoid cooling down of the exhaust after-treatment system when the vehicle is decelerated and the throttle is closed.

According to another embodiment, the combustion engine is operated with diesel. Since an engine operated with diesel works with compression ignition, cylinders, combustion chambers, pistons and valves may be designed in such a way that a substantial phase-shifting of the camshafts, and thus the valve times, is achieved at the same time as a suitable geometry of the components interacting in the engine may be provided, so that a functioning interaction between pistons and valves is achieved.

According to the invention, the pressure in the cylinder is substantially the same as the pressure in the exhaust manifold when the exhaust valve opens, and substantially the same as the pressure in the inlet pipe when the inlet valve is opened, which means that any negative pressure, which could otherwise build up because of the movement of the piston, is relieved.

Since substantially no negative pressure develops in the cylinders, no oil pumping from the crankcase to the cylinders occurs.

By phase-shifting the camshafts, and thus the valve times symmetrically around a number of motor cycles, a smooth transition of the torque impacted on the crankshaft between different operating modes is facilitated.

Between an expansion and an exhaust stroke, the exhaust valves open and close substantially symmetrically around the piston's bottom dead centre. Between the inlet stroke and the compression stroke, the opening and closing of the inlet valves occurs substantially symmetrically around the piston's bottom dead centre. By controlling the opening of the valves substantially symmetrically around the bottom dead centre, the amount of air that goes in and out from the cylinder is substantially the same. Thus, there is substantially no net flow of air through the engine's cylinders.

The vehicle comprises a combustion engine, comprising a crankshaft, preferably a number of cylinders where each one has a forwards and backwards moving piston assembled inside, being connected to the crankshaft for movement forwards and backwards, and a number of inlet and exhaust valves of disc type in order to allow inlet air to come into the cylinders and in order to allow exhausts to leave the cylinders. The inlet and exhaust valves are each controlled and operated by a camshaft, which in turn is operated by the crankshaft. Between the crankshaft and each camshaft there is a phase-shifting device, controlling the camshaft and thus the valves' opening and closing times. The phase-shifting device is preferably connected to a control device, which controls the phase-shifting device to a position adapted to the combustion engine's operating mode. The control device also controls a fuel injection device, delivering fuel to the cylinders.

When the vehicle is controlled for deceleration, the control device will reduce and close the flow of fuel to the cylinders and the combustion engine, and adjust the phase-shifting device for the camshaft, so that there is not net flow of air through the cylinders and no fuel is injected into the cylinders.

The combustion engine preferably has separate camshafts for inlet and exhaust valves. At an operating mode corresponding to normal load in the combustion engine, the phase-shifting device for the camshaft is controlled in such a way, that the exhaust valves open at the bottom dead centre for termination of the expansion stroke and so that the inlet valves open at the top dead centre when the inlet stroke is initiated.

When there is no throttle to the engine and when the vehicle decelerates, the control device will close the supply of fuel to the cylinders and adjust the phase-shifting device for the camshafts, so that there is no net flow of air through the cylinders.

Other advantages of the invention are set out in the detailed description below.

### BRIEF DESCRIPTION OF THE DRAWINGS

Below is a description, as an example, of a preferred embodiment of the invention with reference to the enclosed drawings, on which:
Fig. 1 is a side view of a schematically displayed vehicle, which is controlled to decelerate according to the method according to the present invention,
Fig. 2 pertains to a cross-sectional view of a schematically displayed combustion engine, which is controlled to decelerate the vehicle according to the method according to the present invention,
Fig. 3 shows a diagram of phase-shifting of inlet and exhaust valves in a combustion engine, controlled to decelerate the vehicle according to the method according to the present invention, and
Fig. 4 shows a flow chart of the method to decelerate the vehicle according to the present invention.

### DETAILED DESCRIPTION OF PREFERRED EMBODIMENTS OF THE INVENTION

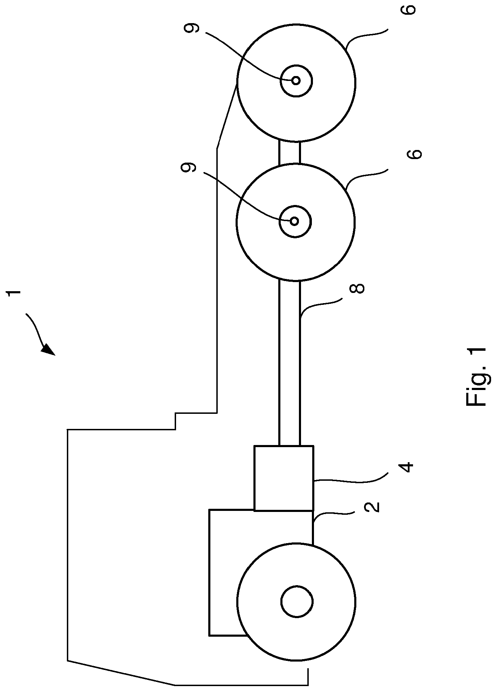

Fig. 1 shows a schematic side view of a vehicle 1, which vehicle 1 is equipped with a combustion engine 2, which is controlled to decelerate the vehicle 1 according to the method according to the present invention. The combustion engine 2 is preferably a diesel engine. The vehicle 1 is also equipped with a gearbox 4 connected to a combustion engine 2, driving the driving wheels 6 of the vehicle 1 via the gearbox 4, a cardan shaft 8 and driving shafts 9. The gearbox 4 may be of manual or automatic type. The gearbox 4 may also be a combined manual and automatic gearbox 4. The gearbox 4 may be controlled to a gear adapted to the vehicle's 1 operating mode.

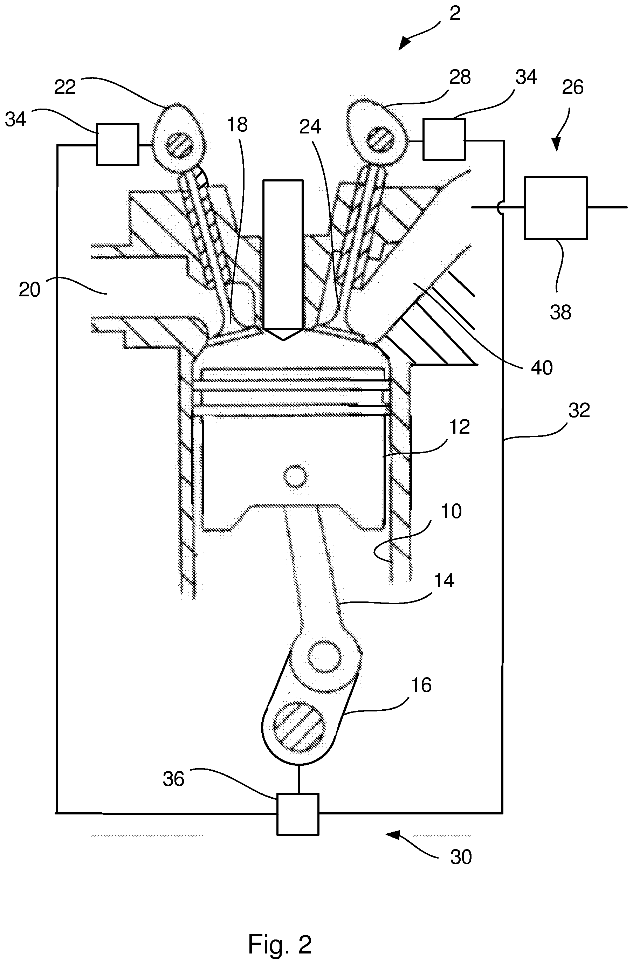

Fig. 2 shows a cross-sectional view of a combustion engine 2, which is controlled to decelerate the vehicle 1 according to the method according to the present invention. The combustion engine 2 comprises at least one cylinder 10 with a piston 12 arranged in each cylinder 10. The piston 12 is connected via a connecting rod 14 to a crankshaft 16, which at rotation moves the piston 12 forwards and backwards in the cylinder 10. At least one inlet valve 18 is arranged in each cylinder 10, which inlet valve 18 is connected with an inlet system 20. A first camshaft 22 controls the at least one inlet valve 18. At least one exhaust valve 24 is arranged in each cylinder 10, which exhaust valve 24 is connected with an exhaust system 26. Preferably, two inlet valves 18 and two exhaust valves 24 are arranged in each cylinder 10. A second camshaft 28 controls the at least one exhaust valve 24. Depending on the type of combustion engine 2, two first and two second camshafts 22, 28 may be arranged in the combustion engine 2. This is advantageous if the engine 2 is of V-type.

A camshaft control 30 is arranged in the combustion engine 2 according to the present invention. The crankshaft 16 controls each camshaft 22, 28 via a camshaft transmission 32. At least one phase-shifting device 34 is arranged between the crankshaft 16 and each camshaft 22, 28, so that each camshaft 22, 28 may be shifted to a position where the inlet and exhaust valves 18, 24 are controlled in such a way, that no air is supplied to the exhaust system 26 when the pistons 12 move forwards and backwards in each cylinder 10. Preferably, a phase-shifting device 34 is arranged for each camshaft 22, 28. A control device 36 receives signals from a number of different sensors (not shown), such as absolute pressure in the inlet manifold, charge air temperature, mass-airflow, throttle position, engine speed, engine load. The control device 36 operates the phase-shifting devices 34, which adjust the angle position of the camshafts 22, 28 in relation to the crankshaft 16.

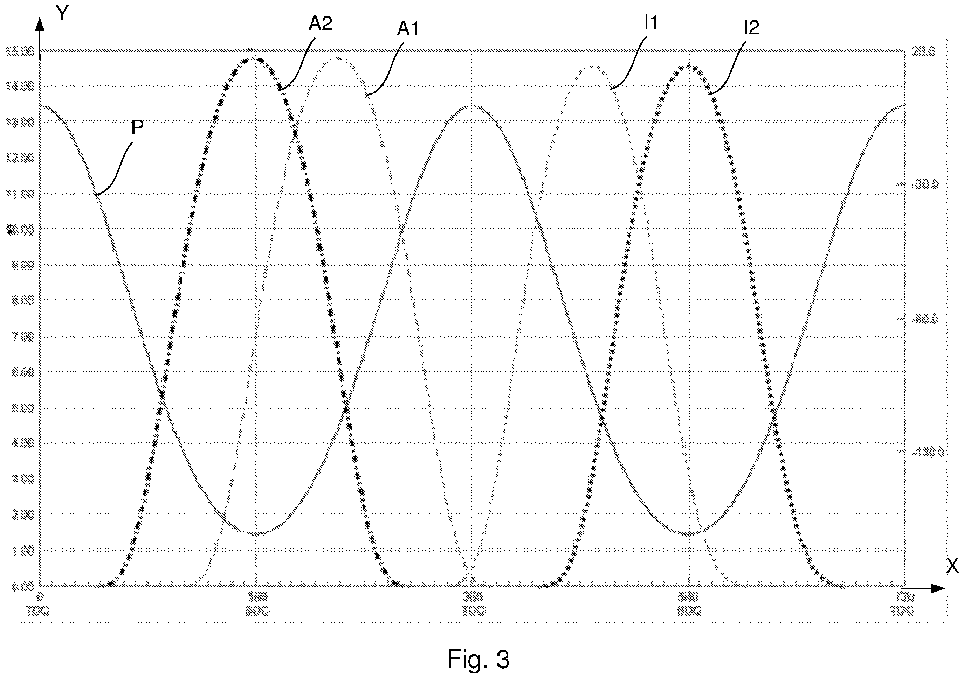

Fig. 3 shows a graph of phase-shifting of inlet and exhaust valves in a combustion engine 2, controlled according to the method according to the present invention. The Y-axis represents the distance that the piston 12 moves inside the cylinder 10, and also the distance that the inlet and exhaust valves 18, 24 move. The X-axis represents the angular movement of the crankshaft 16, and thus the movement of the piston 12. The curve P pertains to the movement of the piston 12 inside the cylinder 10, and Fig. 3 shows how the piston 12 moves between a top dead centre and a bottom dead centre in the cylinder 10. At e.g. 0° the piston 12 is at the top dead centre TDC and at 180° the piston 12 is at the bottom dead centre BDC. The graph in Fig. 3 represents a combustion engine 2 of four-stroke type, which entails that the crankshaft 16 and therefore the piston 12 will have moved 720° when all four strokes have been completed.

The curve A1 represents the movement of the exhaust valve 24 in relation to the piston movement at normal load. The curve I1 represents the movement of the inlet valve 18 in relation to the piston movement at normal load. Fig. 3 thus shows, through the curve A1, that the exhaust valve 24 at normal load opens at the end of the expansion stroke, i.e. at 120°, in order to release the exhausts to the exhaust and after-treatment system 38 during the exhaust stroke. The exhaust valve 24 then closes at the start of the inlet stroke, which occurs at 360°. Roughly at the same time, the inlet valve 18 opens, shown by the curve 11, in order to let air into the cylinder 10. The inlet valve 18 then closes at 590°, wherein the compression stroke is initiated. At 720°, corresponding to 0°, the expansion stroke is started.

The curves I2 and A2 illustrate a situation where the combustion engine 2 is controlled in such a way, that the vehicle 1 decelerates in speed according to the method according to the present invention, wherein the phase-shifting device 34 for the camshaft 22, 28 is adjusted, so that there is no net flow of air through the cylinders 10 and no fuel is injected into the cylinders 10. This effect arises at a phase-shifting of the first camshaft 22 for the inlet valve 18 corresponding to +75° to +85° crankshaft degrees, preferably +80°, and at a phase-shifting of the second camshaft 28 for the outlet valve corresponding to -75° to -85° crankshaft degrees, preferably -80°.

Between an expansion and exhaust stroke, the exhaust valves 24 open and close substantially symmetrically around the piston's 12 bottom dead centre BDC. Between the inlet and compression stroke, the opening and closing of the inlet valves occurs substantially symmetrically around the piston's 12 bottom dead centre BDC. By opening and closing the inlet and exhaust valves 18, 24 in such a manner, the air is kept inside the engine's 2 cylinders 10 when the piston 12 moves towards the bottom dead centre BDC and when the piston 12 moves up towards the top dead centre TDC.

Thus, the exhaust valve's phase-shifting is substantially as large as the inlet valve's 18 phase-shifting. Both valves are thus closed at the final stage of the exhaust stroke and the initial stage of the inlet stroke, so that the air in the cylinder 10 will be compressed and expanded until the inlet valve 18 opens at 420° during the inlet stroke. The air is then sucked into the cylinder 10 during the inlet stroke, and is forced out of the cylinder 10 during the start of the compression stroke when the inlet valve 18 is open. The inlet valve 18 closes at 670°, and the air that is trapped inside the cylinder 10 will then be compressed in order to subsequently expand, when the piston 12 turns at the top dead centre at 720°. When the exhaust valve 24 subsequently opens at 50°, a fraction of air will be sucked into the cylinder 10 from the exhaust channel 40, since the piston 12 is approaching the bottom dead centre at 180°, which entails that the piston 12 creates a negative pressure in the cylinder 10. When the piston 12 subsequently turns at the bottom dead centre at 180°, the piston 12 will force a fraction of air, equal to the fraction of air which it previously sucked in from the exhaust channel 40, out of the cylinder 10. Since the exhaust valve 24 still remains open, said fraction of air will be pressed back into the exhaust channel 40. Therefore, the resulting flow to the exhaust system 26 will be zero. Since there is no net flow of air through the combustion engine's 2 cylinders 10, cooling down and oxygenation of the exhaust after-treatment system 38 is avoided, while no fuel is supplied to the cylinders 10. Therefore, no increase of emissions from the combustion engine 2 occurs at the subsequent throttle opening, and the fuel economy is improved. Since substantially no negative pressure develops in the cylinders 10, no oil pumping from the crankcase to the cylinders 10 takes place, which reduces the oil consumption and results in a reduced environmental impact.

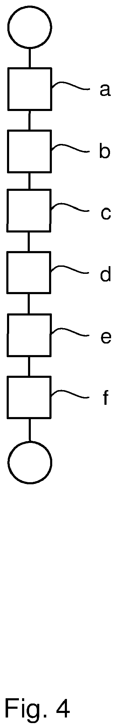

The method for deceleration of the vehicle 1 according to the present invention is described below, jointly with the flow chart in Fig. 4, the method comprising a vehicle 1 with a combustion engine 2, a gearbox 4, driving wheels 6, and a drive shaft 8 arranged between the gearbox 4 and the driving wheels 6, which combustion engine 2 comprises:
- at least one cylinder 10 to which fuel is supplied in order to operate the combustion engine 2;
- a piston 12 arranged in each cylinder 10,
- at least one inlet valve 18 in each cylinder 10, which inlet valve 18 is connected with an inlet system 20;
- a first camshaft 22, which controls the at least one inlet valve 18;
- at least one exhaust valve 24 arranged in each cylinder 10, which exhaust valve 24 is connected with an exhaust system 26;
- a second camshaft 28, which controls the at least one exhaust valve 24; and
- a crankshaft 16, which controls each camshaft 22, 28.

The method comprises the steps to:
a) Close the fuel supply to all cylinders 10, which results in the combustion engine 2 no longer being operated by the fuel.
b) Phase-shift each camshaft 22, 28 in relation to the crankshaft 16, to a position where no air is supplied to the exhaust system 26 when the pistons 12 move forwards and backwards in each cylinder 10. As a result, no air will be supplied to the exhaust after-treatment system 38, entailing that no increase of NOx will occur when the engine is reactivated, since the charge air flow is stopped in each cylinder.
c) Control the gearbox 4 to engage a gear that increases the crankshaft's 16 engine speed, which entails that the vehicle's 1 speed decreases. Thereby, the combustion engine's 2 pumping operation increases, resulting in an increased braking torque and an increased braking action from the combustion engine 2 on the driving shafts 9.

The method also comprises the additional steps to:
d) Phase-shift the first camshaft 22 between +75° and +85° crankshaft degrees, preferably +80°,
e) Phase-shift the second camshaft 28 between -75° and -85° crankshaft degrees, preferably -80°, At such a phase-shift, no air, or a very limited fraction of air, will be supplied to the exhaust after-treatment system 38, resulting in no or a small cooling down of the exhaust after-treatment system 38 at deceleration and when the throttle is closed.

Preferably, two inlet valves 18 and two exhaust valves 24 are controlled with the respective camshafts 22, 28. In such a combustion engine 2, the application of the invention may be very efficient, since the number of valves 18, 24 per cylinder impacts the air's flow through the cylinders 10, which in turn impacts the cooling down of the exhaust after-treatment system 38 at deceleration and when the throttle is closed.

Preferably, the respective valves 18, 24 are controlled with two first and two second camshafts 22, 28. In such a combustion engine 2, the application of the invention may be very efficient, since the number of valves 18, 24 per cylinder 10 impacts the air's flow through the cylinders 10, which in turn impacts the cooling down of the exhaust after-treatment system 38 at deceleration and when the throttle is closed.

The method comprises the additional step to: f) phase-shift each camshaft 22, 28 with a phase-shifting device 34 arranged for each camshaft 22, 28. By phase-shifting each camshaft 22, 28 with a phase-shifting device 34, arranged for each camshaft 22, 28, efficient phase-shifting of the camshafts 22, 28 may be achieved, so that a zero flow through the cylinders 10 arises, and in order thus to avoid cooling down of the exhaust after-treatment system 38 at deceleration and when the throttle is closed. Preferably, the combustion engine 2 is driven with diesel fuel. Since a combustion engine 2 driven with diesel works with compression ignition, the cylinders 10, the pistons 12, and the valves 18, 24 may be designed in such a way, that substantial phase-shifting of the camshafts 22, 28, and thus the valve times, is achieved at the same time as a suitable geometry of the components interacting in the combustion engine 2 may be provided, so that a functioning interaction between pistons 12 and valves 18, 24 is achieved.

The components and features specified above may, within the framework of the invention, be combined between different embodiments specified.

## Claims

1. Method to decelerate a vehicle (1) comprising a combustion engine (2), a gearbox (4), driving wheels (6) and a drive shaft (8) arranged between the gearbox (4) and the driving wheels (6), which combustion engine (2) comprises:
- at least one cylinder (10) to which fuel is supplied in order to operate the combustion engine (2);
- a piston (12) arranged in the/each cylinder (10),
- at least one inlet valve (18) in the/ each cylinder (10), which inlet valve (18) is connected with an inlet system (20);
- a first camshaft (22), which controls the at least one inlet valve (18);
- at least one exhaust valve (24) arranged in the/each cylinder (10), which exhaust valve (24) is connected with an exhaust system (26);
- a second camshaft (28), which controls the at least one exhaust valve (24); and
- a crankshaft (16), which controls each camshaft (22, 28),
**characterised in that** the method comprises the following steps:
a) to close the fuel supply to the/all cylinders (10),
b) to phase-shift each camshaft (22, 28) in relation to the crankshaft (16), to a position where no air is supplied to the exhaust system (26) when the pistons (12) move forwards and backwards in the/each cylinder (10),
c) to control the gearbox (4) to engage a gear that increases the crankshaft's (16) engine speed, which entails that the vehicle's (1) speed decreases.
d) to phase-shift the first camshaft (22) between +75° and +85° crankshaft degrees, preferably +80°, and
e) to phase-shift the second camshaft (28) between -75° and -85° crankshaft degrees, preferably -80°.
f) to phase-shift each camshaft (22, 28) with a phase-shifting device (34) arranged for each camshaft (22, 28).

2. Method according to claim 1 **characterised in that** two inlet valves (18) and two exhaust valves (24) are controlled with the respective camshafts (22, 28).

3. Method according to any of the previous claims, **characterised in that** the respective valves (18, 24) are controlled with two first and two second camshafts (22, 28).

4. Method according to any of the previous claims, **characterised in that** the combustion engine (2) is driven with diesel fuel.

## Patentansprüche

1. Verfahren zum Abbremsen eines Fahrzeugs (1) mit einem Verbrennungsmotor (2), einem Getriebe (4), Antriebsrädern (6) und einer Antriebswelle (8), die zwischen dem Getriebe (4) und den Antriebsrädern (6) angeordnet ist, wobei der Verbrennungsmotor (2) umfasst:
- mindestens einen Zylinder (10), dem Kraftstoff zugeführt wird, um den Verbrennungsmotor (2) zu betreiben;
- einen in dem/jedem Zylinder (10) angeordneten Kolben (12),
- mindestens ein Einlassventil (18) in dem/jedem Zylinder (10), wobei das Einlassventil (18) mit einem Einlasssystem (20) verbunden ist;
- eine erste Nockenwelle (22), die das mindestens eine Einlassventil (18) steuert;
- mindestens ein Auslassventil (24), das in dem/jedem Zylinder (10) angeordnet ist, wobei das Auslassventil (24) mit einem Auslasssystem (26) verbunden ist;
- eine zweite Nockenwelle (28), die das mindestens eine Auslassventil (24) steuert; und
- eine Kurbelwelle (16), die jede Nockenwelle (22, 28) steuert,
**dadurch gekennzeichnet, dass** das Verfahren die folgenden Schritte umfasst:
a) Schließen der Kraftstoffzufuhr zu den/allen Zylindern (10),
b) Phasenverschieben jeder Nockenwelle (22, 28) in Relation zu der Kurbelwelle (16), und zwar in eine Position, in der dem Auspuffsystem (26) keine Luft zugeführt wird, wenn sich die Kolben (12) in dem/jedem Zylinder (10) vorwärts und rückwärts bewegen,
c) Steuern des Getriebes (4) derart, dass ein Gang einlegt wird, der die Motordrehzahl der Kurbelwelle (16) erhöht, was zur Folge hat, dass die Geschwindigkeit des Fahrzeugs (1) abnimmt.
d) Phasenverschieben der ersten Nockenwelle (22) zwischen +75° und +85° Grad der Kurbelwelle, vorzugsweise +80°, und
e) Phasenverschieben der zweite Nockenwelle (28) zwischen -75° und -85° Grad der Kurbelwelle, vorzugsweise -80° Grad.
f) Phasenverschieben jeder Nockenwelle (22, 28) mit einer für jede Nockenwelle (22, 28) vorgesehenen Phasenverschiebevorrichtung (34).

2. Verfahren nach Anspruch 1, **dadurch gekennzeichnet, dass** zwei Einlassventile (18) und zwei Auslassventile (24) mit den jeweiligen Nockenwellen (22, 28) gesteuert werden.

3. Verfahren nach einem der vorangehenden Ansprüche, **dadurch gekennzeichnet, dass** die jeweiligen Ventile (18, 24) mit zwei ersten und zwei zweiten Nockenwellen (22, 28) gesteuert werden.

4. Verfahren nach einem der vorangehenden Ansprüche, **dadurch gekennzeichnet, dass** der Verbrennungsmotor (2) mit Dieselkraftstoff betrieben wird.

## Revendications

1. Procédé pour ralentir un véhicule (1) comprenant un moteur à combustion (2), une boîte de vitesses (4), des roues motrices (6) et un arbre de transmission (8) agencés entre la boîte de vitesses (4) et les roues motrices (6), lequel moteur à combustion (2) comprend :
- au moins un cylindre (10) auquel le carburant est fourni afin d'utiliser le moteur à combustion (2) ;
- un piston (12) agencé dans le/ chaque cylindre (10),
- au moins une soupape d'admission (18) dans le/ chaque cylindre (10), laquelle soupape d'admission (18) est connectée avec un système d'admission (20) ;
- un premier arbre à cames (22) qui contrôle l'au moins une soupape d'admission (18) ;
- au moins une soupape d'échappement (24) agencée dans le/ chaque cylindre (10), laquelle soupape d'échappement (24) est connectée à un système d'échappement (26) ;
- un deuxième arbre à cames (28) qui contrôle l'au moins une soupape d'échappement (24) ; et
- un vilebrequin (16) qui contrôle chaque arbre à cames (22, 28), **caractérisé en ce que** le procédé comprend les étapes suivantes :
a) fermer l'alimentation en carburant du/ de tous les cylindres (10),
b) déphaser chaque arbre à cames (22, 28) par rapport au vilebrequin (16), à une position dans laquelle aucun air n'est fourni au système d'échappement (26) lorsque les pistons (12) avancent et reculent dans le/ chaque cylindre (10),
c) commander la boîte de vitesses (4) pour engager un rapport qui augmente le régime du moteur du vilebrequin (16), ce qui implique que la vitesse du véhicule (1) diminue.
d) déphaser le premier arbre à cames (22) entre +75° et +85° degrés de vilebrequin, de préférence +80°, et
e) déphaser le deuxième arbre à cames (28) entre -75° et -85° degrés de vilebrequin, de préférence -80°.
f) déphaser chaque arbre à cames (22, 28) avec un dispositif de déphasage (34) agencé pour chaque arbre à cames (22, 28).

2. Procédé selon la revendication 1
**caractérisé en ce que** deux soupapes d'admission(18) et deux soupapes d'échappement (24) sont contrôlées avec les arbres à cames respectifs (22, 28).

3. Procédé selon l'une quelconque des revendications précédentes, **caractérisé en ce que** les soupapes (18, 24) respectives sont commandées avec deux premiers et deux deuxièmes arbres à cames (22, 28).

4. Procédé selon l'une quelconque des revendications précédentes, **caractérisé en ce que** le moteur à combustion (2) est entrainé avec du carburant diesel.
